(19) **Europäisches Patentamt / European Patent Office / Office européen des brevets**

(11) **EP 3 148 032 B1**

(12) # FASCICULE DE BREVET EUROPEEN

(45) Date de publication et mention de la délivrance du brevet:
**28.03.2018 Bulletin 2018/13**

(51) Int Cl.:
**H02J 1/10** *(2006.01)*     **H02H 7/26** *(2006.01)*
**H02J 3/36** *(2006.01)*

(21) Numéro de dépôt: **15306514.9**

(22) Date de dépôt: **28.09.2015**

(54) **SYSTÈME D'ALIMENTATION D'UN ENSEMBLE DE CHARGES RACCORDÉES EN PARALLÈLE À UN BUS D'ALIMENTATION CONTINUE**

STROMVERSORGUNGSSYSTEM FÜR EINE ANORDNUNG VON PARALLEL ANGESCHLOSSENEN LASTEN AN EINEN BUS MIT KONTINUIERLICHER STROMVERSORGUNG

POWER SUPPLY SYSTEM OF A SET OF LOADS CONNECTED IN PARALLEL TO A DC POWER BUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**29.03.2017 Bulletin 2017/13**

(73) Titulaire: **GE Energy Power Conversion Technology Ltd**
**Rugby**
**Warwickshire CV21 1BU (GB)**

(72) Inventeurs:
• **LAPASSAT, Nicolas**
**91345 Massy (FR)**

• **POULIQUEN, Jean-Louis**
**91345 Massy (FR)**
• **SAVARIT, Elise**
**91345 Massy (FR)**
• **GRUAU, Nicolas**
**91345 Massy (FR)**
• **WIJEKOON, Piniwan Thiwanka Bandara**
**Nisayuna, NY 12309 (US)**

(74) Mandataire: **Casalonga**
**Casalonga & Partners**
**Bayerstraße 71/73**
**80335 München (DE)**

(56) Documents cités:
**EP-A1- 2 413 485     WO-A2-2014/189675**

**Description**

La présente invention concerne les systèmes d'alimentation de charges électriques destinés notamment, mais non exclusivement, à des applications sous-marines.

Elle se rapporte plus particulièrement à un système d'alimentation de charges alimentées en parallèle à partir d'un bus commun d'alimentation en courant continu.

Les charges alimentées peuvent être de diverses natures et être par exemple constituées par des moteurs à courant alternatif alimentés par des lignes d'alimentation raccordées en parallèle au bus continu par l'intermédiaire d'un convertisseur continu/alternatif.

Le convertisseur constitue un onduleur qui peut par exemple être réalisé à partir de cellules de commutation qui peuvent être pilotées par modulation par largeur d'impulsions.

Comme on le conçoit, en particulier pour des applications sous-marines, la longueur de la ligne d'alimentation du côté continu, s'étendant entre le bus continu et le convertisseur, et la longueur de la ligne d'alimentation côté alternatif, entre le convertisseur et la charge, peuvent être relativement importantes et varier de manière significative d'une ligne d'alimentation à une autre.

En outre, les charges, par exemple des moteurs électriques, peuvent présenter des puissances différentes.

Pour ces raisons, l'impédance globale des lignes d'alimentation, y compris des charges, peut varier de manière significative.

Les charges électriques connectées aux lignes d'alimentation parallèles sont susceptibles de comporter des composants d'électronique de puissance qui peuvent générer des signaux homopolaires qui se propagent dans le bus d'alimentation continu et vers les autres lignes d'alimentation.

Il peut notamment s'agir de convertisseurs dédiés à l'alimentation des charges qui peuvent générer des tensions homopolaires dans le système. De ces tensions résultent des courants homopolaires qui dépendent des impédances du circuit. Les signaux homopolaires peuvent en particulier se propager dans les lignes d'alimentation ayant des modèles d'impédance différents et engendrer des niveaux de tensions et courants excessifs qui peuvent être préjudiciables pour les systèmes d'isolation prévus dans les lignes d'alimentation et dans les charges.

On connaît, dans l'état de la technique, divers types de systèmes d'alimentation de charges capables notamment d'assurer une protection de portions d'un circuit d'alimentation en présence d'un défaut.

On pourra à cet égard se référer aux documents WO 2013/127575 et WO 2014/189675 qui décrivent des systèmes de distribution d'énergie électrique utilisant des fusibles pour la protection des convertisseurs ou des commutateurs électromécaniques destinés à l'isolation électrique d'une portion d'un réseau défectueuse.

On pourra également se référer au document WO 2014/037583 dans lequel les convertisseurs de tension incorporent une isolation galvanique pour le découplage des entrées et des sorties du convertisseur.

On connaît également, du document EP-A-2 413 485, un système d'alimentation électrique d'une charge en courant alternatif à partir d'un réseau alternatif, qui comporte un redresseur comprenant des interrupteurs électroniques commandables pour convertir un courant alternatif fourni par le réseau électrique en un courant continu et un dispositif de commande des interrupteurs électroniques capable de limiter la valeur absolue de la tension entre la masse électrique et une phase du courant alternatif délivré à une charge en présence d'une surtension dans la charge.

Au vu de ce qui précède, l'invention a pour but de proposer un système d'alimentation d'un ensemble de charges raccordées en parallèle capable d'éviter la circulation de perturbations apparaissant dans une ligne d'alimentation de l'une des charges et d'éviter que ces perturbations ne circulent dans les autres charges.

A cet effet, il est proposé un système d'alimentation d'un ensemble de charges selon la revendication 1. Dans un mode de réalisation, les moyens de découplage et d'amortissement comportent en outre au moins une capacité de raccordement à la masse du bus d'alimentation.

Selon la configuration des moyens de découplage et amortissement, on obtient une réduction des contraintes d'isolement des composants sensibles (tels que les moteurs, par exemple) par découplage des lignes d'alimentation, ainsi qu'une réduction et un amortissement des courants homopolaires circulant dans les lignes.

Avantageusement, une résistance est branchée en parallèle sur l'inductance.

Selon une autre caractéristique de l'invention, le système d'alimentation comporte en outre des moyens de protection agissant en cas de défaut sur une portion du système d'alimentation.

Dans un mode de réalisation, les moyens de protection comprennent un ensemble de diodes anti-retour disposées sur les lignes d'alimentation de manière à interdire une circulation du courant vers le bus d'alimentation.

Les moyens de protection comportent également, de préférence, un disjoncteur à composants électroniques de commutation piloté par un système de commande à partir de la valeur du courant circulant dans ladite portion du système d'alimentation.

On peut en outre prévoir un commutateur électromécanique activé en cas de défaut sur ladite portion du système de protection.

Par ailleurs, selon encore une autre caractéristique du système d'alimentation, les lignes d'alimentation comprennent un convertisseur courant continu/courant alternatif alimentant lesdites charges.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 illustre schématiquement un système d'alimentation de charges placées en parallèle ;
- les figures 2 et 3 sont des schémas équivalents homopolaires d'un système d'alimentation comprenant deux lignes d'alimentation en parallèle ;
- la figure 4 est un schéma illustrant le principe de réalisation d'un premier mode de réalisation d'un système d'alimentation conforme à l'invention ;
- la figure 5 est un schéma illustrant le principe d'un système d'alimentation selon un deuxième mode de réalisation selon l'invention ;
- la figure 6 est un schéma montrant le principe de réalisation d'un système d'alimentation selon un mode de réalisation préféré ;
- les figures 7a et 7b d'une part, et 7c et 7d d'autre part, représentent le circuit électrique et une vue schématique d'un mode de réalisation de l'inductance entrant dans la constitution du système d'alimentation des figures 5 et 6, respectivement en mode différentiel et en mode commun;
- la figure 8 illustre de manière détaillée un mode de réalisation préféré d'un système d'alimentation conforme à l'invention ; et
- les figures 9 et 10 sont des schémas illustrant le fonctionnement des deuxièmes moyens de protection d'un système selon l'invention.

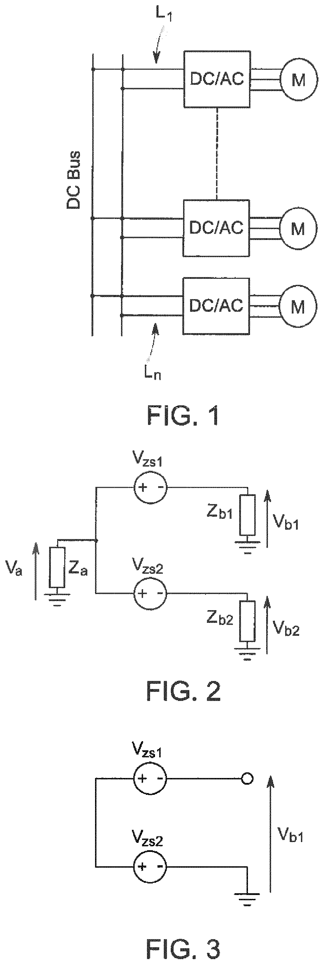

Sur la figure 1, on a représenté un exemple de mise en oeuvre d'un système d'alimentation d'un ensemble de charges.

Comme on le voit, le système d'alimentation comporte un bus d'alimentation DC BUS auquel sont raccordées un ensemble de lignes d'alimentation L1, ..., Ln assurant l'alimentation des charges proprement dites.

Dans l'exemple de réalisation envisagé, le bus est un bus d'alimentation à courant continu et à moyenne tension MVDC.

Les charges alimentées sont ici constituées par des moteurs M à courant alternatif.

On notera cependant que l'on ne sort pas du cadre de l'invention lorsqu'il s'agit d'assurer l'alimentation de tout autre type de charges raccordées en parallèle à un bus d'alimentation continue.

Comme on le voit, les moteurs sont alimentés par les lignes d'alimentation par l'intermédiaire de convertisseurs DC/AC.

Comme indiqué précédemment, les charges, et en particulier les convertisseurs, sont susceptibles de générer des tensions ou des courants homopolaires qui peuvent provoquer l'apparition de hautes tensions qui peuvent être nuisibles pour les moyens d'isolation des lignes d'alimentation, des convertisseurs et des moteurs.

On a représenté sur la figure 2 le schéma équivalent homopolaire d'un système d'alimentation qui, par souci de simplicité, ne comporte que deux lignes d'alimentation alimentées par un bus commun.

Sur ce schéma, $Z_{b1}$ et $Z_{b2}$ représentent respectivement les impédances équivalentes entre le système (convertisseur, charge y compris les portions alternatives des lignes d'alimentation et les impédances des moteurs) et la terre, et $Z_a$ représente l'impédance équivalente entre le bus et la terre, côté continu. $Vzs_1$ et $Vzs_2$ représentent la tension homopolaire générée par les convertisseurs des deux lignes d'alimentation et $V_{b1}$ et $V_{b2}$ représentent la tension aux bornes des impédances $Z_{b1}$ et $Z_{b2}$.

Comme on le conçoit, le circuit équivalent est très dépendant de la valeur de ses paramètres. Par exemple, si $Z_{b2}$ est négligeable devant $Z_a$ et $Z_{b1}$, le circuit équivalent devient celui de la figure 3.

On a alors :

$$V_{b1} = V_{zs2} - V_{zs1} \qquad\qquad (1)$$

Ainsi, la tension au niveau de l'isolation du moteur peut atteindre la somme des tensions homopolaires Vzs1 et Vzs2.

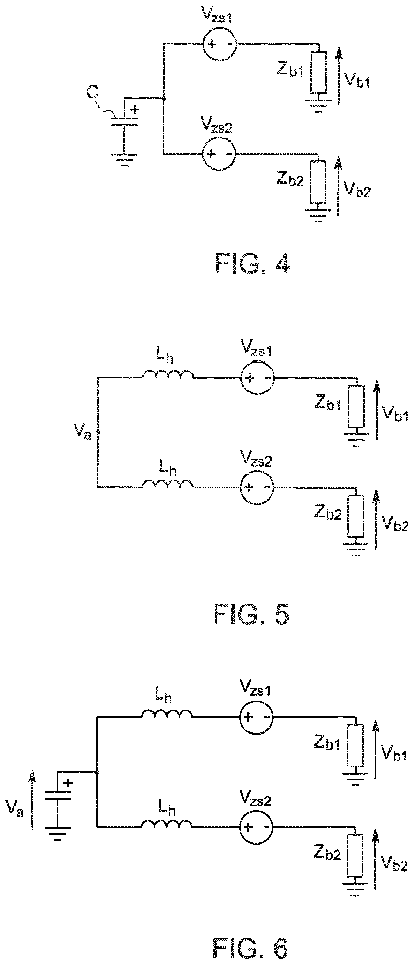

Pour pallier cet inconvénient, comme illustré à la figure 4, dans un premier mode de réalisation, on raccorde le bus continu DC bus à la masse par l'intermédiaire d'une capacité C. On choisira de préférence cette capacité de manière que sa valeur soit supérieure à $Z_{b1}$ et à $Z_{b2}$ de manière à minimiser les interactions entre les lignes d'alimentation et éviter que les signaux homopolaires ne s'ajoutent dans le bus continu.

Il est également possible, comme visible sur la figure 5, de raccorder une inductance Lh sur chacune des lignes d'alimentation en série avec les convertisseurs, du côté continu. Comme on le conçoit, cette inductance absorbe l'essentiel de la composante alternative de la tension homopolaire. Mais on conserve les interactions potentielles entre les lignes d'alimentation.

Ainsi, afin d'éviter les interactions entre les lignes d'alimentation tout en réduisant les signaux homopolaires, en référence à la figure 6, le système d'alimentation est de préférence doté de moyens de découplage et d'amortissement, sur chaque ligne d'alimentation, comprenant une ou de plusieurs inductances en mode commun Lh et une ou de plusieurs capacités C reliant le bus continu à la masse. Grâce à cet agencement, on réduit la tension dans les charges engendrées par les signaux homopolaires. Il a été constaté qu'un tel mode de réalisation est particulièrement adapté pour des applications sous-marines.

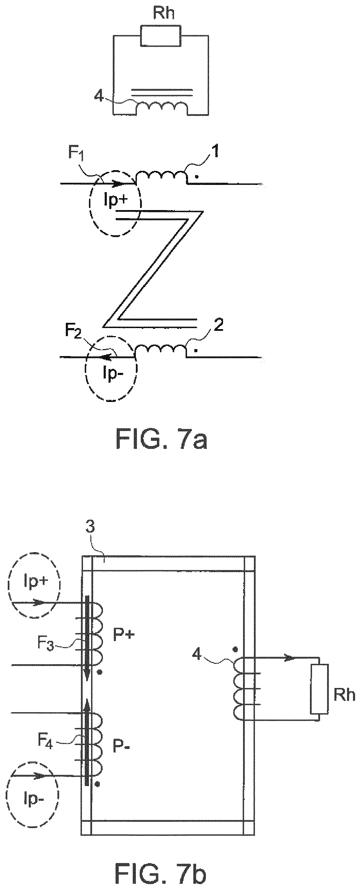

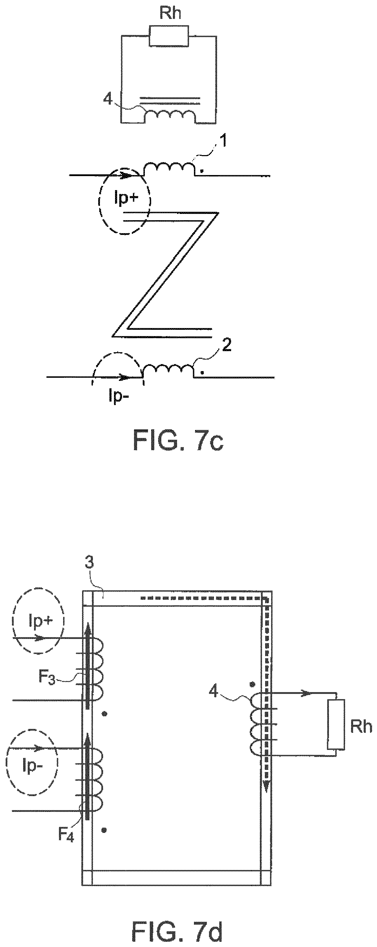

On a représenté sur les figures 7a, 7b, 7c et 7d le circuit électrique et la structure d'une inductance de filtrage du bruit produit par les signaux homopolaires dans le système d'alimentation en mode différentiel (figures 7a et 7b) et en mode commun (figures 7c et 7d).

L'inductance est réalisée à partir de deux enroulements 1 et 2 bobinés ou alimentés en sens inverse autour d'un noyau 3.

Comme illustré par les flèches FI et F2, qui illustrent les courants IP+ et Ip- qui circulent dans le bobinage de l'inductance, en mode commun, les courants IP+ et Ip- circulent dans le même sens dans les deux enroulements tandis qu'en mode différentiel, les courants circulent en sens inverse. En mode différentiel, les deux flux magnétiques créés par les enroulements 1 et 2 ont des signes opposés et s'annulent (flèches F3 et F4). En mode commun, les flux magnétiques sont générés dans la même direction et s'additionnent de sorte qu'une impédance élevée est obtenue.

Il est possible, mais non obligatoire, d'ajouter une résistance d'amortissement en parallèle d'une bobine 1 ou 2 de l'inductance homopolaire ou en parallèle de la bobine 1 et de la bobine 2.

Comme représenté, il est également possible d'ajouter, de manière optionnelle, une résistance d'amortissement Rh en parallèle d'une bobine d'inductance homopolaire 4.

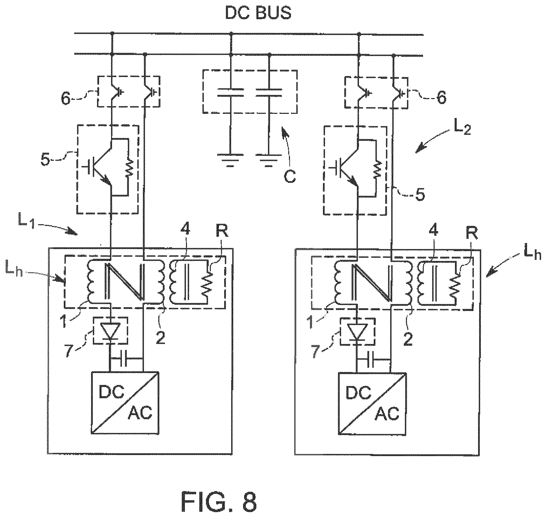

On a représenté sur la figure 8 un mode de réalisation détaillé d'un système d'alimentation conforme à l'invention.

Sur cette figure, on reconnaît le bus commun DC BUS ainsi que les lignes d'alimentation L1 et L2, ici au nombre de deux par souci de clarté, et le circuit de découplage et amortissement en mode commun comprenant deux capacités C et les inductances Lh avec les enroulements primaire 1 et 2 et secondaire 4 et la résistance R en parallèle.

Dans le but d'éviter qu'un défaut, tel qu'un court-circuit, présent dans une charge de l'une des lignes ne se propage sur le bus commun, le système d'alimentation est complété par des moyens de protection.

Ces moyens de protection comportent, pour chaque ligne, un disjoncteur 5 à composants électroniques, ici à IGBT (pour « Insulated Gâte Bipolar Transistor », en anglais) piloté par un circuit de commande (non représenté) à partir de la valeur du courant circulant dans la ligne fournie par un capteur de mesure approprié (non représenté).

Dès que le courant dépasse une valeur de seuil prédéterminée, le circuit de commande pilote l'ouverture du composant de puissance.

Comme on le conçoit, un tel étage de protection est particulièrement efficace dans la mesure où il est capable d'agir très rapidement pour isoler une portion de circuit défectueuse. Il peut toutefois présenter une robustesse insuffisante dans la mesure où il peut lui-même faire l'objet de défauts.

Pour améliorer la robustesse de la protection, les moyens de protection comportent, pour chaque ligne, un moyen d'isolement comprenant un commutateur électromécanique ou électromagnétique 6, par exemple un interrupteur avantageusement motorisé, qui peut être plus long à s'ouvrir mais qui présente un isolement amélioré dans la mesure où l'ouverture du circuit s'effectue ici mécaniquement.

On voit enfin sur la figure 8 que les moyens de protection sont complétés par une diode 7 anti-retour empêchant la circulation du courant provenant d'un convertisseur ou, de manière générale, d'une charge défectueuse vers le bus commun.

On va maintenant décrire le fonctionnement du circuit qui vient d'être décrit en présence d'un défaut sur une ligne.

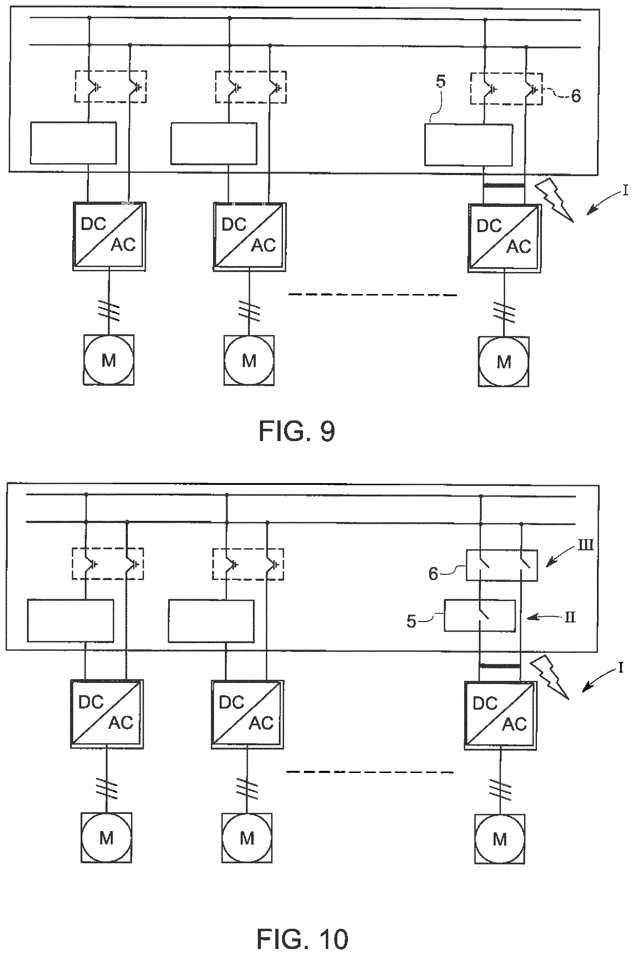

En référence à la figure 9, lorsqu'un court-circuit apparaît sur une ligne entre les moyens de protections 5 et le convertisseur DC/AC, le convertisseur DC/AC est arrêté par ouverture de ses transistors IGBT (étape I).

Lors de la phase II, on provoque l'ouverture rapide du disjoncteur 5 pour ouvrir la branche du circuit défectueuse et éviter que le courant du court-circuit circule vers le bus DC puis vers les autres charges.

Les diodes anti-retour 7 empêchent la circulation d'un courant provenant du convertisseur de la ligne défectueuse et que les condensateurs des autres convertisseurs DC/AC ne se déchargent dans la ligne d'alimentation défectueuse.

Lors de la phase III suivante, on provoque l'ouverture du commutateur électromécanique 6 afin d'isoler mécaniquement la portion de circuit défectueuse et permettre en sécurité la mise en oeuvre d'opérations de maintenance sur cette ligne.

**Revendications**

1. Système d'alimentation d'un ensemble de charges, comprenant un bus d'alimentation (DC BUS) en courant continu et un ensemble de lignes d'alimentation raccordées en parallèle au bus d'alimentation et assurant l'alimentation desdites charges, **caractérisé en ce qu'**il comporte des moyens de découplage et amortissement (Lh, C) aptes à réduire les signaux homopolaires circulant dans le système d'alimentation lors de l'alimentation des charges, les moyens de découplage et amortissement comprenant, sur chaque ligne d'alimentation, une ou plusieurs inductances (Lh) disposées en série avec un convertisseur, du côté courant continu, et une ou plusieurs capacités (C) reliant le bus continu à la masse.

2. Système d'alimentation selon l'une des revendications 1, comprenant une résistance (R) branchée en parallèle sur l'inductance.

3. Système d'alimentation selon l'une quelconque des revendications 1 à 2, comprenant en outre des moyens de protection (5, 6, 7) agissant en cas de défaut sur une portion du système d'alimentation.

4. Système d'alimentation selon la revendication 3, dans lequel les moyens de protection comprennent un ensemble de diodes anti-retour (7) disposées sur les lignes d'alimentation de manière à interdire une circulation de courant vers le bus d'alimentation.

5. Système d'alimentation selon l'une de revendications 3 et 4, dans lequel les moyens de protection comportent un disjoncteur (5) à composants électroniques de commutation piloté par un système de commande à partir de la valeur du courant circulant dans ladite portion du système d'alimentation.

6. Système selon l'une quelconque des revendications 3 à 5, dans lequel les moyens de protection comportent un commutateur électromécanique (6) activé en cas de défaut sur ladite portion du système de protection.

7. Système selon l'une quelconque des revendications 1 à 6, dans lequel les lignes d'alimentation comprennent un convertisseur courant continu/courant alternatif alimentant lesdites charges.


**Patentansprüche**

1. Versorgungssystem einer Gruppe von Lasten, das einen Gleichstrom-Versorgungsbus (DC BUS) und eine Gruppe von Versorgungsleitungen enthält, die parallel an den Versorgungsbus angeschlossen sind und die Versorgung der Lasten gewährleisten, **dadurch gekennzeichnet, dass** es Entkopplungs- und Dämpfungseinrichtungen (Lh, C) aufweist, die die Nullsignale reduzieren können, die bei der Versorgung der Lasten im Versorgungssystem zirkulieren, wobei die Entkopplungs- und Dämpfungseinrichtungen auf jeder Versorgungsleitung eine oder mehrere Drosselspulen (Lh), die in Reihe mit einem Wandler auf der Gleichstromseite angeordnet sind, und einem oder mehreren Kondensatoren (C) enthalten, die den Gleichstrombus mit der Masse verbinden.

2. Versorgungssystem nach Anspruch 1, das einen Widerstand (R) enthält, der parallel an die Drosselspule angeschlossen ist.

3. Versorgungssystem nach einem der Ansprüche 1 bis 2, das außerdem Schutzeinrichtungen (5, 6, 7) enthält, die im Fall einer Störung auf einen Abschnitt des Versorgungssystems einwirken.

4. Versorgungssystem nach Anspruch 3, wobei die Schutzeinrichtungen eine Gruppe von Antirücklaufdioden (7) enthalten, die auf den Versorgungsleitungen angeordnet sind, um ein Fließen des Stroms zum Versorgungsbus zu verhindern.

5. Versorgungssystem nach einem der Ansprüche 3 und 4, wobei die Schutzeinrichtungen einen Unterbrecher (5) mit elektronischen Schaltbauteilen aufweisen, der von einem Steuersystem ausgehend vom Wert des in dem Abschnitt des Versorgungssystems fließenden Stroms gesteuert wird.

6. System nach einem der Ansprüche 3 bis 5, wobei die Schutzeinrichtungen einen elektromechanischen Schalter (6) aufweisen, der im Fall einer Störung in dem Abschnitt des Schutzsystems aktiviert wird.

7. System nach einem der Ansprüche 1 bis 6, wobei die Versorgungsleitungen einen Stromwechselrichter enthalten, der die Lasten versorgt.

**Claims**

1. System for supplying power to a set of loads, comprising a DC power supply bus (DC BUS) and a set of power supply lines that are connected in parallel to the power supply bus and provide said loads with a supply of power, **characterized in that** the system comprises decoupling and damping means (Lh, C) that are suitable for decreasing the homopolar signals flowing through the power supply system when supplying power to the loads, the decoupling and damping means comprising, on each power supply line, one or more inductors (Lh) that are positioned in series with a converter, on the DC current side, and one or more capacitors (C) linking the DC bus to ground.

2. Power supply system according to Claim 1, comprising a resistor (R) that is connected in parallel to the inductor.

3. Power supply system according to either of Claims 1 and 2, further comprising protection means (5, 6, 7) acting, in the event of a fault, on a portion of the power supply system.

4. Power supply system according to Claim 3, wherein the protection means comprise a set of non-return diodes (7) that are positioned on the power supply lines so as to prevent a current flow towards the power supply bus.

5. Power supply system according to either of Claims 3 and 4, wherein the protection means include a circuit breaker (5) having switching electronic components that is driven by a control system on the basis of the value of the current flowing through said portion of the power supply system.

6. System according to any one of Claims 3 to 5, wherein the protection means include an electromechanical switch (6) that is activated in the event of a fault on said portion of the protection system.

7. System according to any one of Claims 1 to 6, wherein the power supply lines comprise a DC-to-AC converter supplying power to said loads.

FIG. 1

FIG. 2

FIG. 3

7

FIG. 4

FIG. 5

FIG. 6

EP 3 148 032 B1

FIG. 7a

FIG. 7b

9

FIG. 7c

FIG. 7d

FIG. 8

FIG. 9

FIG. 10

**EP 3 148 032 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013127575 A
- WO 2014189675 A
- WO 2014037583 A
- EP 2413485 A